# EUROPÄISCHE PATENTSCHRIFT

(11) **EP 3 494 079 B1**
(45) Veröffentlichungstag und Bekanntmachung des Hinweises auf die Patenterteilung: **01.12.2021**
(21) Anmeldenummer: 17797857.4
(22) Anmeldetag: 30.10.2017
(51) Int. Cl.: B66C 1/66, F16B 45/00, F16G 15/08

(54) **ANSCHLAGRING MIT EINER ZUM EINHÄNGEN EINES ANSCHLAGMITTELS ODER ZURRMITTELS DIENENDEN TRAGÖSE**
STOP RING HAVING A SUPPORT EYE LUG USED TO SUSPEND A STOPPING MEANS OR LASHING MEANS
ANNEAU D'ACCROCHAGE COMPRENANT UN OEILLET PORTEUR POUR LA SUSPENSION D'UN MOYEN D'ACCROCHAGE OU D'ARRIMAGE

(30) Priorität: 04.11.2016 DE 202016006871 U
(43) Veröffentlichungstag der Anmeldung: 12.06.2019
(73) Patentinhaber: J.D. Theile GmbH & Co. KG, D-58239 Schwerte (DE)
(72) Erfinder: REDDER, Manfred, 59379 Selm (DE)
(74) Vertreter: Haverkamp, Jens
(86) Internationale Anmeldenummer: PCT/DE2017/100924
(87) Internationale Veröffentlichungsnummer: WO 2018/082742

(56) Entgegenhaltungen:
- DE-A1- 4 336 779
- DE-U1-202016 004 078
- JP-A- 2006 118 676
- US-A1- 2013 082 477

## Beschreibung

Die Erfindung betrifft einen Anschlagring, umfassend eine zum Einhängen eines Anschlag- oder Zurrmittels dienende Tragöse und einen drehbar zur Tragöse angeordneten Gewindebolzen zur Befestigung an einem zu hebenden oder festzulegenden Gegenstand, wobei die Tragöse und der Gewindebolzen durch eine in die Lagerbohrung der Tragöse eingreifenden Lagerzapfen des Gewindebolzens und mehrere Lagerkörper formschlüssig miteinander verbunden sind und mit einem Sperrbolzen mit dem in einer Sperrstellung die Tragöse und der Gewindebolzen drehblockierbar ist, wobei der Boden der Tragöse nach oben hin geschlossen ist.

Anschlagringe werden zum Heben oder Festlegen von Gegenständen, wie z.B. Maschinen oder Maschinebauteilen verwendet. Zu diesem Zweck verfügt ein solcher Anschlagring über einen Gewindebolzen zum Anbringen an einen zu hebenden oder festzulegenden Gegenstand sowie über eine Tragöse zum Aschließen von Anschlag- oder Zurrmitteln.

Die auch als Augenschrauben oder Ringschrauben bekannten Anschlagringe sind genormte Bauteile (DIN 580) und werden in großen Stückzahlen eingesetzt. Die genormten Ringschrauben werden als einstückige Ringe mit angeschmiedeten oder gegossenen Gewindebolzen hergestellt. Durch das Anschlag- oder Zurrmittel kann je nach Richtung der Krafteinleitung ein Drehmoment auf den Gewindebolzen ausgeübt werden, was zur Überlastung oder Lockerung desselben führen kann.

Neben den einteiligen Ausführungsformen sind auch Ringschrauben mit drehbaren Gewindebolzen bekannt. Eine solche Ringschraube ist beispielsweise in der DE 43 36 780 A1 beschrieben. Sie umfasst eine Tragöse mit einer Einstecköffnung im Ösengrund, in der drehbar der Schaft des mit der Tragöse verbundenen Gewindebolzens gelagert ist. Der Gewindebolzen ist zur Übertragung von Zugkräften zwischen ihm und der Tragöse mit einem Kopf versehen. Für die Montage oder Demontage der Ringschraube ist ein zusätzliches Werkzeug erforderlich, das nach der Montage oder Demontage getrennt gelagert werden muss, wobei die Gefahr besteht, dass dieses Werkzeug verloren geht oder da, wo es benötigt wird, nicht zur Verfügung steht.

Eine weitere Ringschraube ist aus der EP 0 654 611 A1 bekannt. Auch bei ihr ist zur Montage oder Demontage der Ringschraube ein eigenes Werkzeug erforderlich. Das Werkzeug kann aber im Gegensatz zur getrennten Lagerung mit der Tragöse der Ringschraube so verbunden werden, dass damit über die Tragöse eine Schraubbewegung in den Gewindebolzen eingeleitet werden kann. Bei Nichtbenutzung, wenn es nicht im Eingriff mit dem Gewindebolzen steht, ist es unverlierbar an der Ringschraube eingehängt. Dabei steht das Werkzeug deutlich auf der Außenseite der Tragöse über, weshalb bei Anwendung in einem engen Raum die Gefahr besteht, dass beim Drehen der Tragöse das nach außen stehende Werkzeug an einem im engen Raum befindlichen Gegenstand hängenbleibt und abreißt.

Die EP 2 646 698 B1 zeigt eine weitere Ausführungsform der Ringschraube, bei der min. ein Sperrglied radial neben dem Bolzenkopf an der Tragöse angebracht und dort befestigt ist, wobei es in eine Ausgangsstellung, in welcher es den Bolzenkopf frei gibt, und in eine Sperrstellung, in der es den Bolzenkopf in Drehrichtung gegenüber der Tragöse blockiert, gebracht werden kann. Da der Verriegelungsmechanismus nach oben offen ist, besteht die Gefahr, dass durch Eindringen von Verschmutzung die Betätigung des Verriegelungsmechanismus erschwert oder verhindert wird.

Bei allen o. g. Ausführungsformen ist die Verbindung Bolzenkopf und Tragöse zwar drehbar, aber nicht als Wälzlager ausgebildet, was den Nachteil beinhaltet, dass die Ringschrauben nicht unter Last gedreht werden dürfen, da die Gefahr bestehen würde, dass die Ringschrauben sich durch Drehen unter Last selbsttätig lösen können. Aus der DE 20 2012 100 764 U1 ist eine Ringschraube bekannt, welche einen Gewindebolzen sowie eine Öse umfasst, wobei die Öse mit einem Lageraußenteil verbunden ist, wohingegen der Gewindebolzen einen entsprechenden Lagerinnenring aufweist. Das Lageraußenteil ist unter Eingliederung von Wälzkörpern an dem Lagerinnenteil abgestützt. Die Wälzkörper sind ringförmig um das Lagerinnenteil herum in min. zwei in einem festen Abstand parallel zueinander verlaufenden Ebenen angeordnet. Für die Montage und Demontage des Gewindebolzens ist ein zusätzliches Werkzeug, mit den zuvor genannten Nachteilen erforderlich. Ein weiterer Nachteil ist, dass, um den Zugang zum Bolzenkopf des Gewindebolzens zu ermöglichen, der Ösengrund der Tragöse nach oben offen ist. Es besteht somit die Gefahr, dass Verschmutzung in das Lager eindringen kann.

Ein Anschlagring mit den Merkmalen des Oberbegriffs des Anspruchs 1 ist aus DE 43 36 779 A1 bekannt. Bei diesem Anschlagring dient eine seitlich bezüglich des Kopfes des Gewindebolzens angeordnete, die Tragöse durchgreifende Bohrung zum Einsetzen eines Sperrbolzens, durch den die Tragöse gegenüber dem Gewindebolzen drehblockierbar ist. Von Nachteil ist bei diesem Stand der Technik, dass der Kopf des Gewindebolzens eine Mehrkantkontur aufweisen muss und der Sperrbolzen, wenn nicht in die Bohrung eingesteckt, verloren gehen kann. Zudem ist ein besonderes Werkzeug erforderlich, damit dieser aus der Bohrung ausgetrieben werden kann.

Ausgehend von diesem diskutierten Stand der Technik liegt der Erfindung daher die Aufgabe zugrunde, einen eingangs genannten Anschlagring derart weiter zu entwickeln, dass dieser nicht nur unter Last drehbar, unempfindlich gegen Verschmutzungen, sondern auch ohne zusätzliches Werkzeug montierbar und demontierbar ist.

Diese Aufgabe wird erfindungsgemäß bei einem Anschlagring der eingangs genannten Art dadurch gelöst, dass als Lagerkörper Lagerrollen vorgesehen sind, dass in dem Boden der Tragöse ein drehbar gelagerter Sperrbolzen angebracht ist, der in der Ausgangstellung nicht mit dem Lagerzapfen des Gewindezapfens im Eingriff steht, der aber durch Betätigung von außen in eine drehblockierende Sperrstellung bringbar ist und dass der Sperrbolzen als Drehstab mit einer Ausnehmung in der Mitte ausgeführt ist.

Gemäß einem Ausführungsbeispiel sind die Lagerrollen als Kegelrollen ausgebildet. Die Lagerbohrung der Tragöse dient hier als Lageraußenring während der Lagerzapfen des Gewindebolzens als Lagerinnenring ausgeführt ist. Der Winkel zwischen Rollenachse und Längsachse des Lagerrings ist so gewählt, dass sowohl bei Zugbelastung als auch bei Querbelastung der Tragöse die Lagerrollen immer auf Druck beansprucht werden. Die Tragöse kann somit auch unter Last gedreht werden.

Der Anschlagring ist mit einem einstellbaren Sperrbolzen ausgestattet, so dass kein zusätzliches Werkzeug zur Montage oder Demontage des Anschlagrings mehr erforderlich ist. Bei Stellung des Sperrbolzens in Sperrstellung ist das Drehen des Gewindebolzens in der Tragöse blockiert, so dass der Gewindebolzen durch Drehen der Tragöse in das Gewinde des zu hebenden oder festzulegenden Gegenstandes eingedreht und ausgedreht werden kann. Bei Stellung des Sperrbolzens in Ausgangsstellung wird die Drehbewegung zwischen Tragöse und Gewindebolzen freigegeben. Die Anordnung des Sperrbolzens im geschlossenen Boden der Tragöse führt zu einer platzsparenden Anordnung, und diese ist somit auch gegen jegliche Art der Verschmutzung geschützt.

Nachfolgend ist die Erfindung anhand eines Ausführungsbeispiels unter Bezugnahme auf die beigefügten Figuren beschrieben. Es zeigen:
- Fig. 1:: eine schematisierte, teils geschnittene Ansicht des Anschlagrings,
- Fig. 2:: eine schematisiert, teils geschnittene Ansicht des Anschlagringes, Position des Sperrbolzens in Ausgangsstellung,
- Fig. 3:: Seitenansicht des Anschlagrings aus Fig.2, Position des Stellhebels in Ausgangsstellung,
- Fig. 4:: eine schematisierte, teils geschnittene Ansicht des Anschlagrings, Position des Sperrbolzens in Sperrsteilung,
- Fig. 5:: Seitenansicht des Anschlagrings aus Fig.4, Position des Stellhebels in Sperrstellung,
- Fig. 6:: Vorderansicht des Anschlagrings aus Fig. 4 und
- Fig. 7:: eine vergrößerte, teils geschnittenen Ansicht des Sperrbolzens in der Ebene des Kugelsperrbolzens.

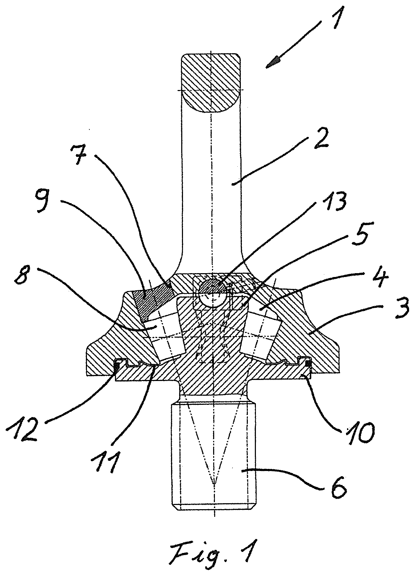

Fig. 1 zeigt einen Anschlagring 1 mit einer Tragöse 2 und einem als Lagerbohrung 4 ausgestaltetem Boden 3, in dem ein Lagerzapfen 5 des Gewindebolzens 6 angeordnet ist. Zur formschlüssigen Verbindung und zum Unterstützen der Leichtgängigkeit der Drehbewegung der Tragöse 2 gegenüber dem Gewindebolzen 6 werden durch eine Öffnung 7 im Boden 3 der Tragöse 2 Lagerrollen 8 zwischen Lagerbohrung 4 und Lagerzapfen 5 eingefüllt. Die Öffnung 7 wird durch einen Verschlussstopfen 9 verschlossen. Der Stopfen 9 kann eingepresst, eingeschlagen oder eingeklebt sein. Um das Lager gegen Verschmutzung zu schützen, ist der Ringbund 10 des Gewindebolzens 6 mit einer Labyrinthdichtung 11 und einem Dichtring 12 ausgestattet. Der Sperrbolzen 13 ist in Fig. 1 in Ausgangsstellung dargestellt.

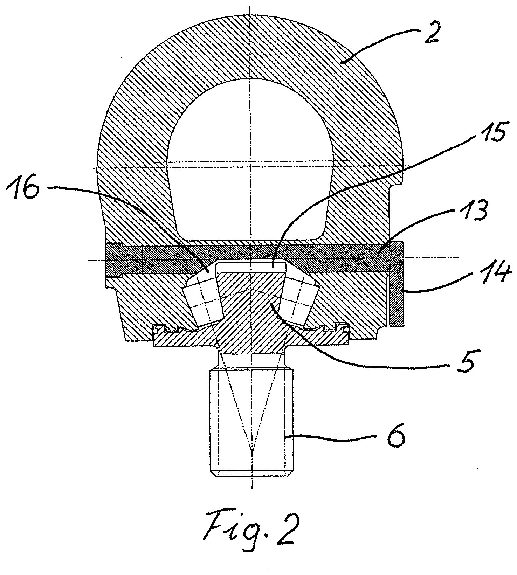

In Fig. 2 ist der Verriegelungsmechanismus zwischen Tragöse 2 und Gewindebolzen 6 mittels Sperrbolzen 13 dargestellt. Der Kopf des Lagerzapfens 5 des Gewindebolzens 6 ist mit einer Nut 15 ausgestattet, in die ein Abschnitt des Sperrbolzens 13 nach Drehung um 180° eintauchen kann. In der hier dargestellten Position des Sperrbolzens 13 in Ausgangsstellung kann kein Kontakt zwischen Sperrbolzen 13 und Lagerzapfen 5 stattfinden, da das Sperrglied 13 im Bereich des Lagerzapfens 5 eine Ausnehmung 16 besitzt, die sich über eine Länge erstreckt, die min. dem Durchmesser des Lagerzapfens 5 entspricht. Die Tragöse 2 ist somit frei drehbar gegenüber dem in einen zu hebenden oder festzulegenden Gegenstand eingeschraubten Gewindebolzen 6.

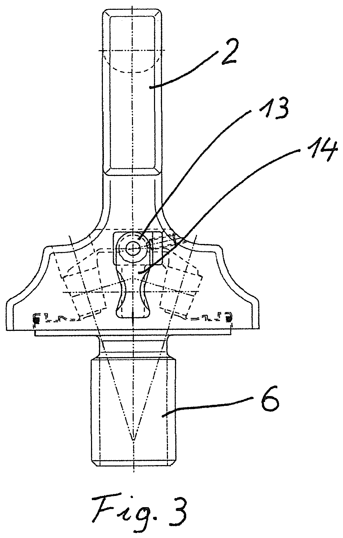

In der Ansicht in Fig. 3 ist der Stellhebel 14, mit dem der Sperrbolzen 13 von der hier dargestellten Ausgangsstellung in die Sperrstellung gedreht werden kann, dargestellt.

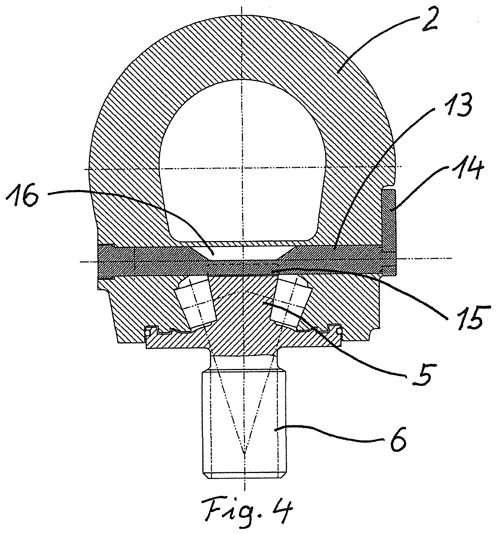

Die Darstellung in Fig. 4 zeigt die Verriegelung zwischen Tragöse 2 und Gewindebolzen 6 mittels Sperrbolzen 13. Mit Hilfe des außen zugänglichen Stellhebels 14 wird der Sperrbolzen 13 um 180° gedreht, so dass der Sperrbozen mit dem der Ausnehmung 16 gegenüberliegenden Bolzenabschnitt in die Nut 15 des Lagerzapfens 5 eintaucht. In dieser Sperrstellung ist das Verdrehen der Tragöse 2 gegenüber dem Gewindezapfen 5 nicht mehr möglich. Der Gewindebolzen 6 kann somit durch Drehen der Tragöse 2 ohne zusätzliches Werkzeug in einen zu hebenden oder festzulegenden Gegenstand eingeschraubt werden.

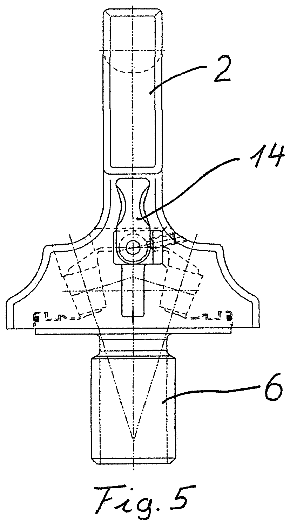

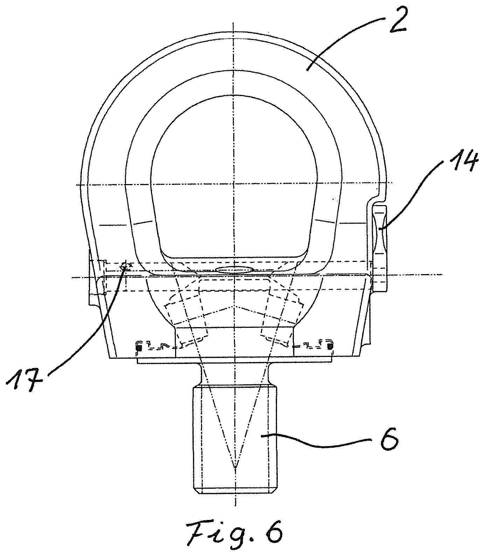

Fig. 5 zeigt eine Seitenansicht des Anschlagrings 1 mit Stellung des Stellhebels in Sperrstellung. In Fig. 6 ist die Vorderansicht des in Fig. 5 gezeigten Anschlagrings dargestellt, in der auch die Positionierung des Kugelsperrbolzens 17, mit dem der Sperrbolzen 13 in Ausgangs- und Sperrstellung arretiert werden kann, erkennbar ist.

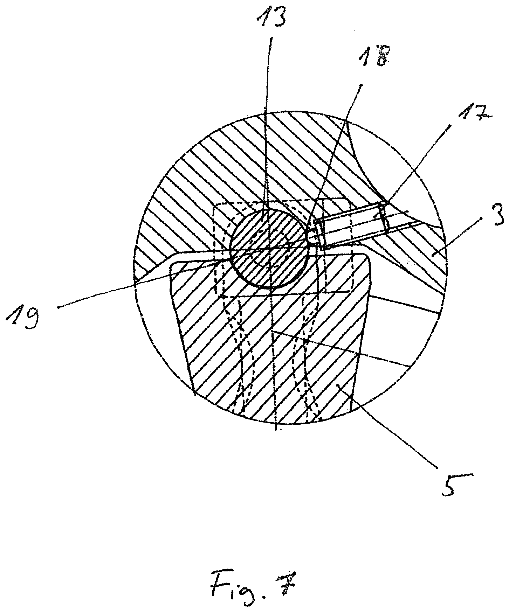

Fig. 7 zeigt einen vergrößerten Ausschnitt aus dem Bereich des Sperrbolzens 13 und eines aus dem Stand der Technik bekannten Kugelsperrbolzens 17. Die federbelastete Kugel des Kugelsperrbolzens 17 taucht je nach Stellung des Sperrbolzens, Ausgangsstellung oder Sperrstellung, in die Senkbohrung 18 und 19 des Sperrbolzens 13 ein. Beim Schwenken des Sperrgliedes 13 mittels Stellhebel 14 muss also die Kugel gegen die andrückende Federkraft in den Kugelsperrbolzen gedrückt werden. Eine selbsttätige Umstellung von Ausgangsstellung in Sperrstellung oder umgekehrt ist somit ausgeschlossen.

### Bezugszeichenliste

- 1: Anschlagring
- 2: Tragöse
- 3: Boden der Tragöse
- 4: Lagerbohrung
- 5: Lagerzapfen
- 6: Gewindebolzen
- 7: Bohrung in Boden der Tragöse 3
- 8: Lagerrolle
- 9: Verschlussstopfen
- 10: Ringbund
- 11: Labyrinthdichtung
- 12: Dichtring
- 13: Sperrbolzen
- 14: Stellhebel
- 15: Nut im Lagerzapfen 5
- 16: Ausnehmung im Sperrbolzen 13
- 17: Kugelsperrbolzen
- 18: Senkbohrung
- 19: Senkbohrung

## Patentansprüche

1. Anschlagring (1), umfassend eine zum Einhängen eines Anschlag- oder Zurrmittels dienende Tragöse (2) und einen drehbar zur Tragöse (2) angeordneten Gewindebolzen (6) zur Befestigung an einem zu hebenden oder festzulegenden Gegenstand, wobei die Tragöse (2) und der Gewindebolzen (6) durch eine in die Lagerbohrung (4) der Tragöse (2) eingreifenden Lagerzapfen (5) des Gewindebolzens (6) und mehrere Lagerkörper formschlüssig miteinander verbunden sind und mit einem Sperrbolzen (13) mit dem in einer Sperrstellung die Tragöse (2) und der Gewindebolzen (6) drehblockierbar ist, wobei der Boden (3) der Tragöse (2) nach oben hin geschlossen ist, **dadurch gekennzeichnet, dass** als Lagerkörper Lagerrollen (8) vorgesehen sind, dass in dem Boden (3) der Tragöse (2) ein drehbar gelagerter Sperrbolzen (13) angebracht ist, der in der Ausgangstellung nicht mit dem Lagerzapfen (5) des Gewindezapfens (6) im Eingriff steht, der aber durch Betätigung von außen in eine drehblockierende Sperrstellung bringbar ist und dass der Sperrbolzen (13) als Drehstab mit einer Ausnehmung (16) in der Mitte ausgeführt ist.

2. Anschlagring (1) nach Anspruch 1, **dadurch gekennzeichnet, dass** der Sperrbolzen (13) im Bereich der Ausnehmung (16) einen Querschnitt aufweist, der annähernd einem Halbkreis entspricht.

3. Anschlagring (1) nach Anspruch 2, **dadurch gekennzeichnet, dass** der halbkreisförmige Querschnitt des Sperrbozens (13) sich über eine Länge erstreck, die min. dem Durchmesser des Lagerzapfens (5) des Gewindebolzens (6) entspricht.

4. Anschlagring (1) nach einem der Ansprüche 2 oder 3, **dadurch gekennzeichnet, dass** der Sperrbolzen (13) mittels Stellhebel (14) gedreht werden kann.

5. Anschlagring (1) nach einen der Ansprüche 2 bis 4, **dadurch gekennzeichnet, dass** der Drehwinkel des Sperrbolzens (13) ca. 180° beträgt.

6. Anschlagring (1) nach einem der Ansprüche 2 bis 5, **dadurch gekennzeichnet, dass** der Lagerzapfen (5) mit einer Nut ausgestattet ist.

7. Anschlagring (1) nach einem der Ansprüche 2 bis 6, **dadurch gekennzeichnet, dass** der Sperrbolzen (13) in seiner Ausgangsstellung und in seiner Sperrstellung arretierbar ist.

8. Anschlagring (1) nach Anspruch 7, **dadurch gekennzeichnet, dass** zur Arretierung der Endstellungen, Ausgangsstellung und Sperrstellung, die Kugel eines Kugelsperrbolzens (17) in Senkbohrungen (18 und 19) eintaucht.

9. Anschlagring (1) nach einem der Ansprüche 1 bis 8, **dadurch gekennzeichnet, dass** eine Bohrung (7) im Boden (3) der Tragöse (2) für die Montage der Lagerrollen (8) vorgesehen ist.

10. Anschlagring (1) nach einem der Ansprüche 1 bis 9, **dadurch gekennzeichnet, dass** die Bohrung (7) im Boden (3) der Tragöse (2) durch einen Stopfen (9) verschlossen ist.

11. Anschlagring (1) nach einem der Ansprüche 1 bis 10, **dadurch gekennzeichnet, dass** der Gewindebolzen (6) mit einem Ringbund (10) versehen ist.

12. Anschlagring (1) nach Anspruch 11, **dadurch gekennzeichnet, dass** im Ringbund (10) eine Labyrinthdichtung (11) vorgesehen ist.

13. Anschlagring (1) nach einem der Ansprüche 11 oder 12, **dadurch gekennzeichnet, dass** der Ringspalt zwischen Boden (3) der Tragöse (2) und Ringbund (10) des Gewindebolzens (6) durch einen Dichtring (12) abgedichtet ist.

## Claims

1. Stop ring (1), comprising a support eye lug (2) used to suspend a stopping or lashing means, and a threaded pin (6), rotatably arranged with respect to the support eye lug (2), for fixing to an object to be lifted or fixed, wherein the support eye lug (2) and the threaded pin (6) are connected to one another in a form-fitting manner by a bearing journal (5) of the threaded pin (6), which engages in the bearing borehole (4) of the support eye lug (2), and a plurality of bearing bodies, and having a locking element (13), by means of which, in a locking position, the support eye lug (2) and the threaded pin (6) can be locked against rotation, wherein the bottom (3) of the support eye lug (2) is enclosed upwards, **characterised in that**, as bearing bodies, bearing rollers (8) are provided, that a rotatably mounted locking element (13) is located in the base (3) of the support eye lug (2), which in the initial position is not in engagement with the bearing journal (5) of the threaded pin (6), but which, by actuation from outside, can be brought into a locking position providing blocking against rotation, and that the locking element (13) is configured as a rotating rod with a cut-out opening (16) in the middle.

2. Stop ring (1) according to claim 1, **characterised in that** the locking element (13) exhibits a cross-section in the region of the cut-out opening (16) which corresponds approximately to a semicircle.

3. Stop ring (1) according to claim 2, **characterised in that** the semicircular cross-section of the locking element (13) extends over a length which corresponds to the diameter of the bearing journal (5) of the threaded pin (6).

4. Stop ring (1) according to any one of claims 2 or 3, **characterised in that** the locking element (13) can be rotated by means of an adjusting lever (14).

5. Stop ring (1) according to any one of claims 2 to 4, **characterised in that** the angle of rotation of the locking element (13) amounts to approx. 180°.

6. Stop ring (1) according to any one of claims 2 to 5, **characterised in that** the bearing journal (5) is provided with a groove.

7. Stop ring (1) according to any one of claims 2 to 6, **characterised in that** the locking element (13) can be locked in its initial position and in its blocking position.

8. Stop ring (1) according to any one of claim 7, **characterised in that**, for the locking of the end positions, initial position, and blocking position, a sphere of a spherical locking element (17) is lowered into recess holes (18 and 19).

9. Stop ring (1) according to any one of claims 1 to 8, **characterised in that** a borehole (7) is provided in the bottom (3) of the support eye lug (2) for the fitting of the bearing rollers (8).

10. Stop ring (1) according to any one of claims 1 to 9, **characterised in that** the borehole (7) in the bottom (3) of the support eye lug (2) is closed by a plug (9).

11. Stop ring (1) according to any one of claims 1 to 10, **characterised in that** the threaded pin (6) is provided with an annular collar (10).

12. Stop ring (1) according to claim 11, **characterised in that** a labyrinth seal (11) is provided in the annular collar (10).

13. Stop ring (1) according to any one of claims 11 or 12, **characterised in that** the annular gap between the bottom (3) of the support eye lug (2) and the annular collar (10) of the threaded pin (6) is sealed by a sealing ring (12).

## Revendications

1. Anneau d'accrochage (1), comprenant un œillet porteur (2) servant à accrocher un moyen d'accrochage ou d'arrimage et un boulon fileté (6) disposé de manière rotative par rapport à l'œillet porteur (2) destiné à être fixé sur un objet à soulever ou à immobiliser, l'œillet porteur (2) et le boulon fileté (6) étant raccordés l'un à l'autre avec une complémentarité de forme par un tourillon (5) du boulon fileté (6) qui s'engage dans l'alésage (4) de l'œillet porteur (2) et par plusieurs paliers et avec un boulon de blocage (13) grâce auquel, dans une position de blocage, l'œillet porteur (2) et le boulon fileté (6) peuvent être bloqués en rotation, le fond (3) de l'œillet porteur (2) étant fermé vers le haut, **caractérisé en ce que** sont prévus, en guise de paliers, des rouleaux de palier (8), **en ce qu'**un boulon de blocage (13) est logé en rotation dans le fond (3) de l'œillet porteur (2), qui n'est, dans la position initiale, pas engagé par le tourillon (5) du boulon fileté (6) mais qui peut, quand il est actionné par l'extérieur, être mis dans une position de blocage qui bloque la rotation et **en ce que** le boulon de blocage (13) est conformé en tige de rotation avec un évidement (16) au milieu.

2. Anneau d'accrochage (1) selon la revendication 1, **caractérisé en ce que** le boulon de blocage (13) présente dans la zone de l'évidement (16) une section qui correspond sensiblement à un demi-cercle.

3. Anneau d'accrochage (1) selon la revendication 2, **caractérisé en ce que** la section en forme de demi-cercle du boulon de blocage (13) s'étend sur une longueur qui correspond au moins au diamètre du tourillon (5) du boulon fileté (6).

4. Anneau d'accrochage (1) selon l'une des revendications 2 ou 3, **caractérisé en ce que** le boulon de blocage (13) peut être tourné à l'aide d'un levier de réglage (14).

5. Anneau d'accrochage (1) selon l'une des revendications 2 à 4, **caractérisé en ce que** l'angle de rotation du boulon de blocage (13) s'élève à environ 180°.

6. Anneau d'accrochage (1) selon l'une des revendications 2 à 5, **caractérisé en ce que** le tourillon (5) est muni d'une rainure.

7. Anneau d'accrochage (1) selon l'une des revendications 2 à 6, **caractérisé en ce que** le boulon de blocage (13) peut être arrêté dans sa position initiale et dans sa position de blocage.

8. Anneau d'accrochage (1) selon la revendication 7, **caractérisé en ce que** pour arrêter les positions de fin de course, la position initiale et la position de blocage, la bille d'un boulon de blocage à bille (17) s'enfonce dans des perçages creux (18 et 19).

9. Anneau d'accrochage (1) selon l'une des revendications 1 à 8, **caractérisé en ce qu'**un perçage (7) est prévu dans le fond (3) de l'œillet porteur (2) pour le montage des rouleaux de palier (8).

10. Anneau d'accrochage (1) selon l'une des revendications 1 à 9, **caractérisé en ce que** le perçage (7) dans le fond (3) de l'œillet porteur (2) est fermé par un bouchon (9).

11. Anneau d'accrochage (1) selon l'une des revendications 1 à 10, **caractérisé en ce que** le boulon fileté (6) est muni d'un épaulement annulaire (10).

12. Anneau d'accrochage (1) selon la revendication 11, **caractérisé en ce qu'**une étanchéité à labyrinthe (11) est prévue dans l'épaulement annulaire (10).

13. Anneau d'accrochage (1) selon l'une des revendications 11 ou 12, **caractérisé en ce que** la fente annulaire entre le fond (3) de l'œillet porteur (2) et l'épaulement annulaire (10) du boulon fileté (6) est rendue étanche par un joint d'étanchéité (12).
